# EUROPÄISCHE PATENTSCHRIFT

(11) **EP 2 156 239 B1**
(45) Veröffentlichungstag und Bekanntmachung des Hinweises auf die Patenterteilung: **10.08.2011**
(21) Anmeldenummer: 08784183.9
(22) Anmeldetag: 02.06.2008
(51) Int. Cl.: G02B 27/22, G03B 35/24, H04N 13/00

(54) **VERFAHREN ZUR AUSRICHTUNG EINES OPTISCHEN ELEMENTS AUF EINEM BILDSCHIRM**
METHOD FOR ORIENTING AN OPTICAL ELEMENT ON A SCREEN
PROCÉDÉ PERMETTANT D'ALIGNER UN ÉLÉMENT OPTIQUE SUR UN ÉCRAN

(30) Priorität: 07.06.2007 DE 102007026628
(43) Veröffentlichungstag der Anmeldung: 24.02.2010
(73) Patentinhaber: 3D International Europe GmbH, 07745 Jena (DE)
(72) Erfinder: OTTE, Stephan, 07745 Jena (DE); MEICHSNER, Jens, 99425 Weimar (DE)
(74) Vertreter: Oehmke, Volker
(86) Internationale Anmeldenummer: PCT/DE2008/000925
(87) Internationale Veröffentlichungsnummer: WO 2008/148378

(56) Entgegenhaltungen:
- US-A1- 2004 008 251
- US-A1- 2004 263 970
- US-A1- 2006 051 109

## Beschreibung

Die Erfindung bezieht sich auf ein Verfahren zur Ausrichtung eines optischen Elements auf einem Bildschirm, insbesondere zur Erzeugung eines Bildschirms zur räumlichen Darstellung.

Seit geraumer Zeit existieren Ansätze zu dem Fachgebiet der optischen Elemente für die räumliche Darstellung, insbesondere in Ausgestaltung solcher optischer Elemente als Parallaxenbarrieren. Ein Pionier auf diesem Gebiet war Frederic Ives, der in der Schrift GB 190418672 A ein System mit einem "Linienschirm" zur 3D-Darstellung vorstellte. Weiterhin sind in der Schrift von Sam H. Kaplan "Theory of parallax barriers", Journal of SMPTE Vol. 59, No 7, pp 11-21, July 1952 grundlegende Erkenntnisse zur Verwendung von Barriereschirmen für die 3D-Darstellung beschrieben.
Lange Zeit gelang jedoch keine umfassende Verbreitung von autostereoskopischen Systemen. Erst in den 80er Jahren des 20. Jahrhunderts konnte auf Grund der nunmehr zur Verfügung stehenden Rechenleistung und neuartigen Displaytechnologien eine gewisse Renaissance der 3D-Systeme einsetzen. In den 90er Jahren schnellte die Anzahl von Patentanmeldungen und Veröffentlichungen zu brillenfreien 3D-Visualisierungen förmlich in die Höhe. Herausragende Ergebnisse wurden erzielt von den folgenden Erfindern bzw. Anbietern:
In der JP 08331605 AA beschreiben Masutani Takeshi et al. eine Stufenbarriere, bei der ein transparentes Barriereelement in etwa die Abmaße eines Farbsubpixels (R, G oder B) aufweist. Mit dieser Technik war es erstmals möglich, den bei den meisten autostereoskopischen Systemen auf Grund der Darstellung gleichzeitig mehrerer Ansichten (mindestens zwei, bevorzugt mehr als zwei Ansichten) auftretenden Auflösungsverlust in der horizontalen Richtung teilweise auch auf die vertikale Richtung umzulegen. Nachteilig ist hier wie bei allen Barriereverfahren der hohe Lichtverlust. Außerdem verändert sich der Stereokontrast bei seitlicher Bewegung des Betrachters von nahezu 100% auf etwa 50% und dann wieder ansteigend auf 100%, was eine im Betrachtungsraum schwankende 3D-Bildqualität zur Folge hat.

Mit der DE 100 03 326 C2 gelang Armin Grasnick et al. eine Weiterentwicklung der Barrieretechnologie in Bezug auf zweidimensional strukturierte wellenlängenselektive Filterarrays zur Erzeugung eines 3D-Eindrucks. Nachteilig ist jedoch auch hier die gegenüber einem 2D-Display stark verminderte Helligkeit derartiger 3D-Systeme. Schließlich meldeten Wolfgang Tzschoppe et al. die WO 2004/077839 A1 an, welche eine in der Helligkeit verbesserte Barrieretechnologie betrifft. Basierend auf dem Ansatz einer Stufenbarriere der JP 08331605 AA sowie der DE 100 03 326 C2 wird hier ein spezielles Tastverhältnis der transparenten zu den opaken Barrierefilterelementen vorgestellt, welches größer als 1/n mit n der Anzahl der dargestellten Ansichten ist. Die in dieser Schrift offenbarten Ausgestaltungen und Lehren erzeugen jedoch in aller Regel unangenehme Moiré-Effekte und/oder eine stark eingeschränkte Tiefenwahrnehmung, da der Stereokontrast - verglichen mit etwa der Lehre der JP 08331605 AA - stark herabgesetzt wird.
In der US 2006/0051109 A1 (Lim et al.) wird die Herstellung eines 3D-Bildschirms beschrieben, bei welcher ein 3D bildgebendes Gerät (z. B. eine Linse oder ein Barriereschirm) vor einem Bildschirm ausgerichtet wird und dann bei korrekter Ausrichtung eine Klebeverbindung ausgehärtet wird. Dabei wird charakteristisch ein schwarzer Strich dargestellt, der von einem Operator oder einer Kamera beobachtet wird. Nachteilig ist hier insbesondere, dass bei der Ausrichtung anhand lediglich eines schwarzen Striches oder einer schwarzen Fläche nicht notwendigerweise die nötige Korrektheit erreicht wird. Die weiterhin vorgeschlagenen Verfahren, mindestens ein linkes und ein rechtes Bild mit unterschiedlichen Bildinhalten von jeweils einer vollen weißen und einer vollen schwarzen Fläche als Ausrichttestbild zu nutzen, erfordern demgegenüber die Auswertung von zwei disjunkten Teilbildern, nämlich dem linken und dem rechten.
In der DE 102 52 830 B3 (Maly-Motta) wird ein autostereoskopischer Adapter (insbesondere in Form eines Lentikularschirms) für einen Flachbildschirm beschrieben, welcher eine automatische Kalibrierung über einen elektrooptischen Sensor erfährt. Über die dabei zu verwendenden Testbilder wird allerdings nichts ausgesagt, so dass über die Güte der schlussendlichen Kalibrierung keine Aussage getroffen werden kann.

Der Erfindung liegt die Aufgabe zugrunde, eine Möglichkeit zur Ausrichtung eines optischen Elements auf einem Bildschirm zur Erzeugung eines Bildschirms zur räumlichen Darstellung mit möglichst einfachen Mitteln anzugeben, so dass eine hinreichend exakte Ausrichtung in kurzer Zeit realisiert wird.

Diese Aufgabe wird erfindungsgemäß gelöst durch ein Verfahren gemäβ Anspruch 1.

Vorteilhaft ist das optische Element ausgebildet als Parallaxenbarriereschirm, als Lentikularschirm, als aktives oder passives holografisch-optisches Element (HOE), als Linsenraster oder als Prismenraster.

Bevorzugt wird das Verfahren derart ausgestaltet, dass das Testbild mindestens zwei erste gerade Linien umfasst, welche zwei voneinander verschiedene Ausdehnungsrichtungen aufweisen, wobei mindestens einige dieser Linien in den jeweils n>1 Ansichten A(k) an unterschiedlichen horizontalen Positionen angeordnet sind und das Testbild mindestens zwei zweite gerade Linien umfasst, die jeweils parallel zu einer der ersten gerade Linien ausgerichtet sind und die in den jeweils n>1 Ansichten A(k) an jeweils zumindest den gleichen horizontalen Positionen angeordnet sind. Hierdurch wird auch eine Ausrichtung hinsichtlich der vertikalen Relativposition des optischen Elements zum Bildschirm ermöglicht.
Im Übrigen müssen nicht alle ersten geraden Linien paarweise disjunkte Ausdehnungsrichtungen aufweisen, insbesondere wenn es mehr als zwei sind. Es genügt, wenn die gesamte Gruppe von ersten geraden Linien mindestens 2 Ausdehnungsrichtungen aufweist. Durch die parallele Anordnung der zweiten geraden Linien zu den ersten geraden Linien ergibt sich eine äquivalente Aussage für die zweiten geraden Linien.

Außerdem wird eine bestmögliche Ausrichtung des optischen Elements zu dem Bildschirm hinsichtlich aller drei möglichen rotativen Relativpositionen, d.h. aller drei Drehachsen im dreidimensionalen Raum, erreicht. Dies ist von besonderem Vorteil, wenn das optische Element nur temporär angebracht wird, da dann der apparative Aufwand für eine temporäre oder wiederholte korrekte Ausrichtung gering gehalten wird, weil Fehler bei der Ausrichtung leicht aufgedeckt und korrigiert werden können.

Die Ausrichtung des optischen Elements hinsichtlich der horizontalen (und ggf. vertikalen) Relativposition wird in der näher bezeichneten Toleranz selbstredend nur innerhalb wiederkehrender Perioden erreicht, die in der Regel etwa ganzzahlige Vielfache der Breite bzw. Höhe eines Bildelements x(i,j) sind, wobei das jeweilige ganzzahlige Vielfache durch die horizontale bzw. vertikale Periodizität der in dem Testbild vorhandenen Ansichten A(k) bestimmt ist.

Der Schritt der Ausrichtung kann prinzipiell von Hand durch einen Operator oder automatisch durch einen Roboter oder ggf. sogar gemischt von einem Operator und einem Roboter durchgeführt werden.
Der Index i adressiert die Zeilen und der Index j die Spalten auf dem Raster aus Bildelementen x(i,j).
Die Anzahl von n>1, beispielsweise also 2, 3, 4, 5, 6, 7, 8, 9 oder 16 Ansichten im Testbild erlaubt zum einen eine effiziente Testbilderstellung und erzeugt andererseits eine hinreichend gute Testwirkung zur Erzielung der korrekten Ausrichtung.

Die Parameter für das optische Element können im Falle eines Parallaxenbarriereschirms beispielweise unter Zuhilfenahme der beiden aus dem eingangs genannten Kaplan-Artikel bekannten Gleichungen (1) und (2) einfach berechnet werden. Damit ergeben sich alle notwendigen Relationen zwischen dem Abstand s, zwischen dem Raster aus Bildelementen x(i,j) und dem optischen Element, dem beispielhaft zu 65 mm gesetzten durchschnittlichen Augenabstand beim Menschen, dem Betrachtungsabstand, der (horizontalen) Periodenlänge der transparenten Abschnitte der Barriere sowie die Streifenbreite besagter transparenter Abschnitte. Ebenso geben einige der eingangs genannten Schriften weitere Ausgestaltungshinweise für optische Elemente wie Lentikularschirme, die dem Fachmann hinreichend bekannt sind.

In dem erfindungsgemäßen Verfahren sind nun vorteilhaft genau zwei Ausdehnungsrichtungen der ersten und damit auch der zweiten geraden Linien vorhanden, die jeweils senkrecht zueinander stehen. Weiterhin ist es günstig, wenn die - ohne Beschränkung der Allgemeinheit - erste Ausdehnungsrichtung der ersten geraden Linien in Richtung der Zeilen (i) der Bildelemente x(i,j) und die zweite Ausdehnungsrichtung der ersten geraden Linien in Richtung der Spalten (j) der Bildelemente x(i,j) angeordnet sind. In der Praxis hat es sich bewährt wenigstens eine horizontale erste gerade Linie und mindestens 5 vertikale Linien im Testbild zu nutzen.

Überdies ist es sinnvoll das Testbild so zu gestalten, dass in mindestens einer der n>1 Ansichten A(k) jeweils jede erste gerade Linie nahtlos in genau eine zweite gerade Linie übergeht.
Es können darüber hinaus in mindestens einer der n>1 Ansichten A(k) vier rechte Winkel enthalten sein, die derart angeordnet sind, dass ein kreuzförmiger Abschnitt gebildet wird. Dann soll nach dem Schritt der Ausrichtung des optischen Elements vor dem Bildschirm mindestens eine erste gerade Linie der ersten Ausdehnungsrichtung und mindestens eine weitere erste gerade Linie der zweiten Ausdehnungsrichtung im von der Kamera aufgenommenen Abbild des dargebotenen Testbildes innerhalb des durch die vier rechten Winkel gebildeten kreuzförmigen Abschnittes befindlich sein, wobei die Abstände jeweils dieser Linien zu den jeweils nächstbenachbarten beiden rechten Winkeln im Wesentlichen gleich groß sind. Mittels dieser Ausgestaltung wird die Korrektheit der Ausrichtung noch erhöht.

In den meisten Fällen, aber nicht zwingend immer, wird das nach der Ausrichtung von der Kamera aufgenommene Abbild des dargebotenen Testbildes zu mindestens 40% Bildelemente genau einer der n>1 Ansichten A(k) beinhalten.

Jeweils alle ersten und jeweils alle zweiten geraden Linien haben vorzugweise die gleiche Farbe, wobei sich die Farbe der ersten und die der zweiten geraden Linien bevorzugt unterscheiden.
Um das erfindungsgemäße Verfahren für den industriellen Einsatz noch günstiger zu gestalten, sind in mindestens einer - bevorzugt in allen - der n>1 Ansichten A(k) alphanumerische Zeichen, bevorzugt Modell- bzw. Seriennummern und/oder Identifikationsmarken/-objekte enthalten. Damit wird sichergestellt, dass für ein bestimmtes Bildschirmmodell auch das richtige Testbild verwendet wird, etwa wenn im Bild die Modellnummer zu sehen ist und der Operator bzw. Roboter diese Modellnummer stets mit der des aktuell in Arbeit befindlichen Bildschirms vergleicht. Nach der Ausrichtung des optischen Elements kann außerdem ein weiterer Schritt der Abspeicherung des von der Kamera aufgenommenen Abbildes des dargebotenen Testbildes durchgeführt werden, wobei bevorzugt eine eindeutige Zuordnung zu dem physischen Bildschirm und/oder dem darauf ausgerichteten optischen Element vorgenommen wird, beispielsweise durch die Benennung der abzuspeichernden Bilddatei für das besagte Abbild in Form einer Seriennummer des Bildschirms. Hierdurch kann später zweifelsfrei nachgewiesen werden, dass ein bestimmter Bildschirm durch Anbringung respektive Ausrichtung des optischen Elements ordnungsgemäß in den 3D-Zustand überführt worden ist.

Fernerhin entsprechen die Bildelemente x(i,j) jeweils einzelnen Farbsubpixeln (R, G oder B) oder Clustern von Farbsubpixeln (z. B. RG, GB oder RGBR oder sonstige) oder Vollfarbpixeln, wobei mit Vollfarbpixeln sowohl weißmischende Gebilde aus RGB-Farbsubpixeln, also RGB-Tripletts, als auch - je nach Bilderzeugungstechnologie - tatsächliche Vollfarbpixel - wie etwa bei Projektionsbildschirmen häufig verbreitet - gemeint sind.

Prinzipiell kann das optische Element nach der Ausrichtung vor dem Bildschirm in einem definierten Abstand s dauerhaft an dem Bildschirm angebracht werden. Hier würde es sich dann um eine permanente Umrüstung handeln.
Demgegenüber ist es aber auch möglich, dass das optische Element nach dem Schritt der Ausrichtung nicht an dem Bildschirm angebracht wird, sondern dass in einem weiteren Schritt auf dem optischen Element und/oder auf dem Bildschirm Markierungen angebracht werden, welche eine spätere ausgerichtete Anbringung des optischen Elements an dem Bildschirm gestatten, ohne zu diesem späteren Zeitpunkt das gesamte erfindungsgemäße Verfahren wiederholen zu müssen.

Der Bildschirm kann bevorzugt ein Farb-LCD-Bildschirm, ein Plasma-Display, ein Projektionsschirm, ein LED-basierter Bildschirm, ein OLED-basierter Bildschirm, ein SED-Bildschirm oder ein VFD-Bildschirm sein.

Für den Fall, dass als optisches Element ein Parallaxenbarriereschirm verwendet wird, umfasst dieser unter einem Neigungswinkel a gegenüber der Vertikalen geneigte, transparente und opake Abschnitte. Er besteht aus einem Glassubstrat, auf welches (z.B. an der Rückseite) die Barrierestruktur aufgebracht ist.
Die Barrierestruktur kann zum einen ein belichteter und entwickelter fotografischer Film sein, der rückseitig auf das Glassubstrat auflaminiert ist, wobei bevorzugt die Emulsionsschicht des fotografisches Films nicht zum Glassubstrat zeigt.
Alternativ können die opaken Bereiche der Barrierestruktur durch auf das Glassubstrat aufgedruckte Farbe gebildet werden. Die transparenten Bereiche entstehen dabei einfach durch das Weglassen der Farbe auf den entsprechenden Bereichen.
Weitere Herstellungsverfahren sind im Stand der Technik bekannt und bedürfen hier keiner weiteren Erläuterung.
Bei dem erfindungsgemäßen Verfahren erfolgt die Anordnung der Bildteilinformationen verschiedener Ansichten A(k) im dargebotenen Testbild auf dem Raster aus Bildelementen x(i,j) vorteilhaft in einem zweidimensionalen periodischen Muster, wobei die Periodenlänge in der horizontalen und der vertikalen Richtung bevorzugt nicht mehr als jeweils 32 Bildelemente x(i,j) umfasst. Ausnahmen von dieser Obergrenze von jeweils 32 Bildelementen x(i,j) sind zulässig.

Regelhaft sollte der Winkel, welcher die besagte horizontale und vertikale Periodenlänge des besagten zweidimensionalen periodischen Musters als Gegenund Ankathete aufspannt, im Wesentlichen dem Neigungswinkel a der transparenten Abschnitte auf einem Parallaxenschirm bzw. der Zylinderlinsen auf einem Lentikularschirm gegenüber der Vertikalen entsprechen.

Vorteilhaft enthält das optische Element Mittel zur Verminderung von Störlichtreflexen, bevorzugt mindestens eine interferenzoptische Entspiegelungsschicht.

Bei der späteren 3D-Darstellung auf dem Bildschirm mit dem ausgerichteten optischen Element entsprechen die Ansichten A(k) bevorzugt jeweils verschiedenen Perspektiven einer Szene oder eines Gegenstandes, wie bei verschiedenen anderen 3D-Wiedergabeverfahren auch.

Die Erfindung soll nachstehend anhand von Ausführungsbeispielen näher erläutert werden. Die Zeichnungen zeigen:
- Fig. 1: den schematischen Aufbau zur Umsetzung des erfindungsgemäßen Verfahrens,
- Fig. 2: eine beispielhafte Barrierestruktur für den Fall der Verwendung eines Parallaxenbarriereschirms als optisches Element im erfindungsgemäßen Verfahren,
- Fig.3: eine beispielhafte Bildkombination der Bildteilinformationen verschiedener Ansichten im Testbild,
- Fig. 4 - Fig.6: Sichtbeispiele für einzelne Ansichten A(k), deren Bildteilinformationen im dargebotenen Testbild zur Darstellung gelangen.

Sämtliche Zeichnungen sind nicht maßstäblich. Dies betrifft insbesondere auch Winkelmaße.

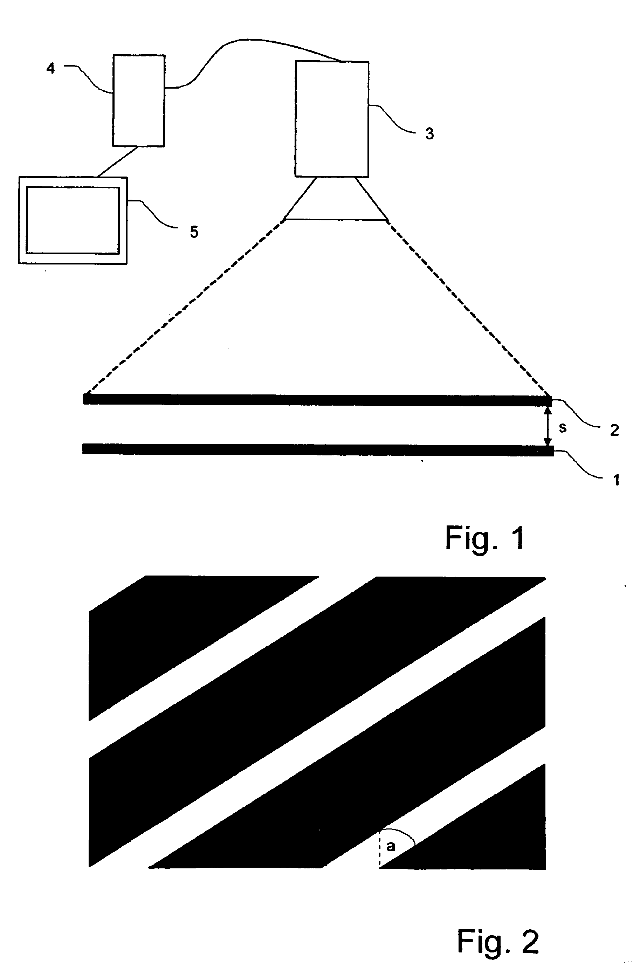

Die Fig. 1 zeigt den schematischen Aufbau zur Umsetzung des erfindungsgemäßen Verfahrens. Dabei wird als optisches Element 2 beispielhaft ein Parallaxenbarriereschirm auf einem Bildschirm 1 mit Bildelementen x(i,j) in einem Raster aus Zeilen i und Spalten j im Abstand s ausgerichtet, wodurch ein Bildschirm zur räumlichen Darstellung entsteht. Weiterhin zu sehen ist eine (im Allgemeinen zweidimensionale) Kamera 3, deren Ausgangssignal hier beispielhaft mittels einer Frame-Grabber-Karte in einen PC 4 eingespeist wird, der dieses Signal umwandelt und wiederum auf einem Kontrollmonitor 5 anzeigt.
Erfindungsgemäß werden die folgenden Schritte ausgeführt:
- Darbietung eines Testbildes, welches aus verschiedenen Ansichten A(k) mit k = 1,...,n und n>1 besteht, auf den Bildelementen x(i,j) mit Zeilen i und Spalten j, wobei das Testbild mindestens zwei erste gerade Linien 6a, 6b umfasst, und mindestens zwei dieser Linien 6a, 6b in den jeweils n Ansichten A(k) an unterschiedlichen horizontalen Positionen angeordnet sind und wobei das Testbild mindestens zwei zweite gerade Linien 7a, 7b umfasst, die jeweils parallel zu einer der ersten geraden Linien 6a, 6b ausgerichtet sind und die in den jeweils n Ansichten A(k) an jeweils zumindest den gleichen horizontalen Positionen angeordnet sind,
- Beobachtung des dargebotenen Testbildes durch das optische Element 2 hindurch aus einem definierten Abstand mittels einer zweidimensionalen Kamera 3,
- Ausrichtung des optischen Elements 2 vor dem Bildschirm 1 derart, dass im von der Kamera 3 aufgenommenen Abbild des dargebotenen Testbildes jeweils jede erste gerade Linie 6a, 6b nahtlos in mindestens eine entsprechend angeordnete zweite gerade Linie 7a, 7b übergeht, und dass alle ersten und zweiten geraden Linien 6a, 6b, 7a, 7b im Abbild gerade und ohne Unterbrechung dargestellt sind,
- so dass die Ausrichtung des optischen Elements 2 zu dem Bildschirm 1 mit Bildelementen x(i,j) hinsichtlich der rotativen Relativposition des optischen Elements 2 zum Bildschirm 1 mit einer Toleranz von höchstens 3 Bogenminuten genau definiert ist, und
- so dass die Ausrichtung des optischen Elements 2 zu dem Bildschirm 1 mit Bildelementen x(i,j) hinsichtlich der horizontalen Relativposition des optischen Elements 2 zum Bildschirm 1 mit einer Toleranz von höchstens der Breite eines Bildelements x(i,j) genau definiert ist.

In der hier vorgestellten Ausgestaltung umfasst das Testbild mindestens zwei erste gerade Linien 6a, 6b, welche zwei voneinander verschiedene Ausdehnungsrichtungen aufweisen, wobei mindestens einige dieser Linien 6a, 6b in den jeweils n>1 Ansichten A(k) an unterschiedlichen horizontalen Positionen angeordnet sind und das Testbild mindestens zwei zweite gerade Linien 7a, 7b umfasst, die jeweils parallel zu einer der ersten geraden Linien 6a, 6b ausgerichtet sind und die in den jeweils n>1 Ansichten A(k) an jeweils zumindest den gleichen horizontalen Positionen angeordnet sind.

Der Schritt der Ausrichtung wird beispielsweise von Hand durch einen Operator durchgeführt.
Die Kamera 3 ist bevorzugt in einem Abstand vor dem optischen Element 2 angeordnet, welcher einem ausgewählten 3D-Betrachtungsabstand vor dem Bildschirm 1 entspricht. Dieser wird - wie dem Fachmann bekannt ist - regelhaft durch den Abstand s zwischen Bildschirm 1 und optischem Element 2 in Verbindung mit weiteren Parametern, die beispielsweise in der eingangs genannten Schrift von Kaplan aufgezählt sind, festgelegt. Bevorzugt ist die Kamera 3 dabei optisch senkrecht vor dem Flächenmittelpunkt des Bildschirms 1 positioniert.

In Fig. 2 ist eine beispielhafte Barrierestruktur eines optischen Elements 2 zur Verwendung im erfindungsgemäßen Verfahren dargestellt. Das optische Element 2, d.h. in diesem Falle der Parallaxenbarriereschirm, umfasst unter einem Neigungswinkel a gegenüber der Vertikalen geneigte, transparente und opake Abschnitte. Er besteht aus einem Glassubstrat, auf welches an der Rückseite die Barrierestruktur aufgebracht ist. Andere Ausgestaltungen sind möglich, wie etwa Substrate, die nicht aus Glas bestehen (z. B. aus Kunststoff).
Die Barrierestruktur ist hier zum Beispiel ein belichteter und entwickelter fotografischer Film, der rückseitig auf das Glassubstrat auflaminiert ist, wobei bevorzugt die Emulsionsschicht des fotografisches Films nicht zum Glassubstrat zeigt.

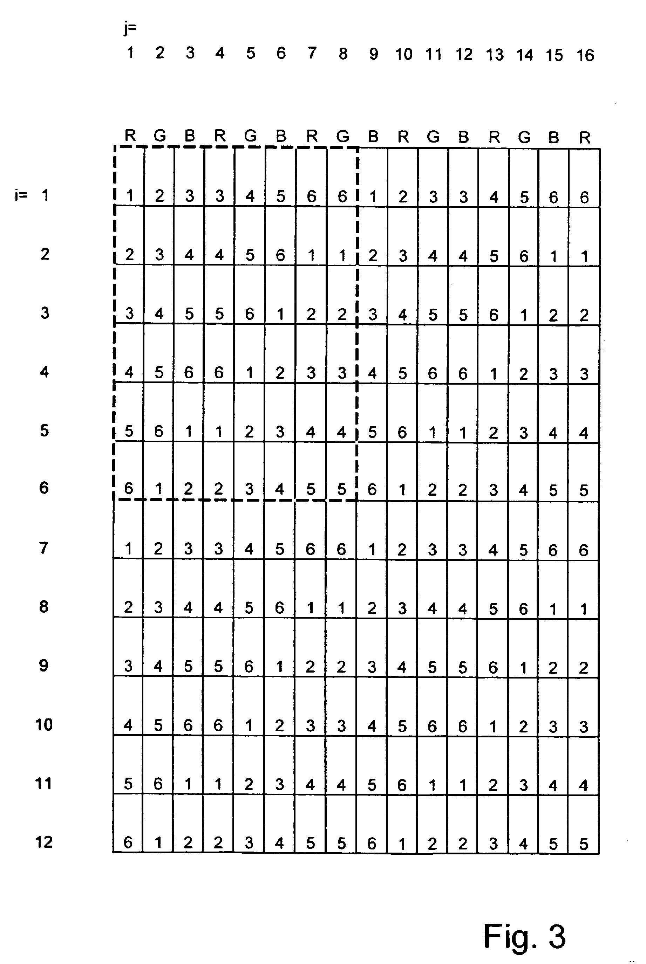

Ferner gibt Fig. 3 eine beispielhafte Bildkombination der Bildteilinformationen von n=5 verschiedenen Ansichten A(k) im Testbild wieder, welche auf den Bildelementen x(i,j) dargestellt wird. Bei dem erfindungsgemäßen Verfahren erfolgt die Anordnung der Bildteilinformationen verschiedener Ansichten A(k) im dargebotenen Testbild auf dem Raster aus Bildelementen x(i,j) vorteilhaft in einem zweidimensionalen periodischen Muster.
Regelhaft sollte der Winkel, welcher die besagte horizontale und vertikale Periodenlänge des besagten zweidimensionalen periodischen Musters als Gegenund Ankathete aufspannt, im Wesentlichen dem Neigungswinkel a der transparenten Abschnitte auf einem Parallaxenschirm bzw. der Zylinderlinsen auf einem Lentikularschirm als optisches Element 2 gegenüber der Vertikalen entsprechen.

Vorteilhaft enthält das optische Element 2 Mittel zur Verminderung von Störlichtreflexen bevorzugt mindestens eine interferenzoptische Entspiegelungsschicht.

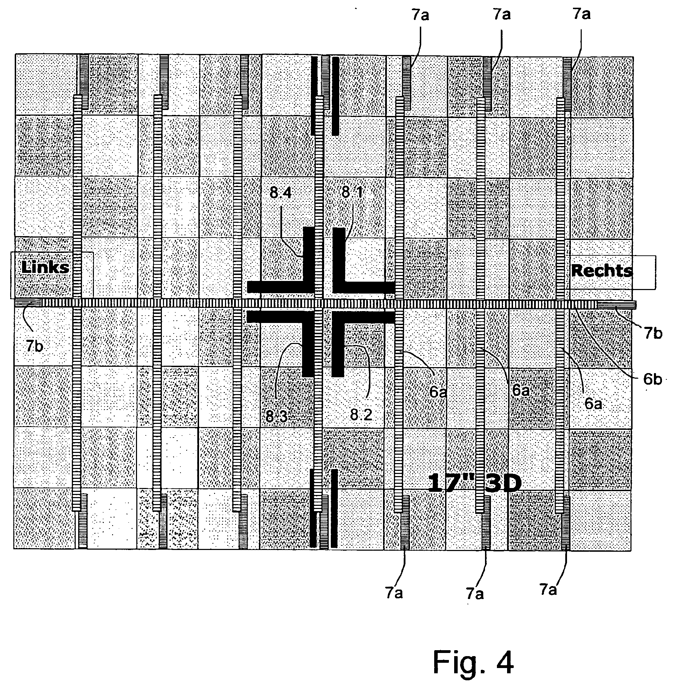

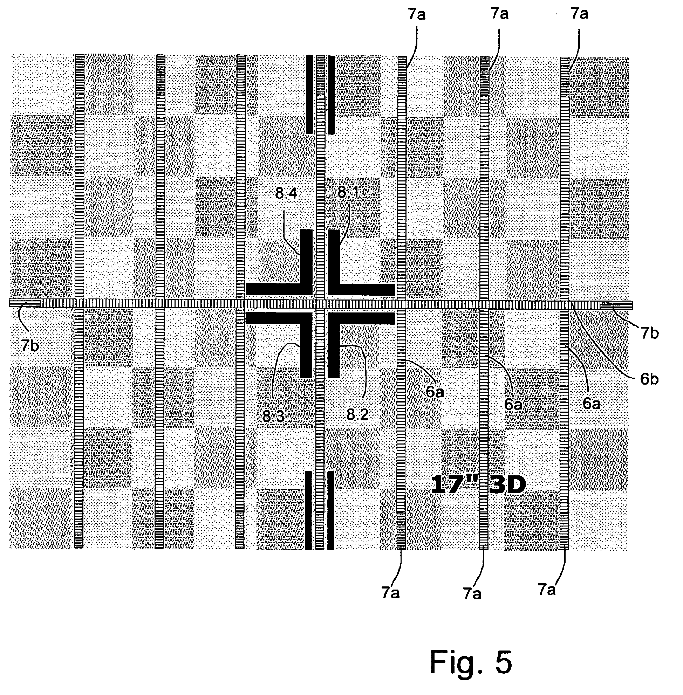

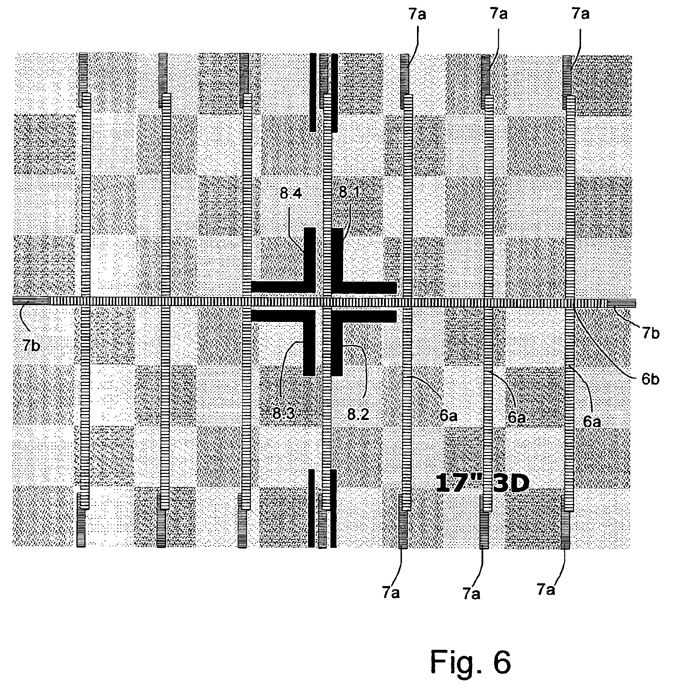

Weiterhin zeigen die Fig. 4 bis Fig. 6 Sichtbeispiele für einzelne Ansichten A(k) mit k = 1, k = 3 und k = 5, deren Bildteilinformationen im dargebotenen Testbild zur Darstellung gelangen.
Zu erkennen sind mindestens zwei erste gerade Linien 6a, 6b, welche zwei voneinander verschiedene Ausdehnungsrichtungen aufweisen. Diese Linien sind in den jeweils n = 5 Ansichten A(k) an unterschiedlichen horizontalen Positionen angeordnet. Das Testbild umfasst ferner mindestens zwei zweite gerade Linien 7a, 7b, die jeweils parallel zu einer der ersten geraden Linien 6a, 6b ausgerichtet sind und die in den jeweils n = 5 Ansichten A(k) an jeweils zumindest den gleichen horizontalen Positionen angeordnet sind.
Die ersten Linen 6a und 6b sind dabei vorteilhaft, wie aus den Figuren 4 bis 6 ersichtlich, jeweils senkrecht zueinander angeordnet. Weiterhin ist es günstig, wenn die - ohne Beschränkung der Allgemeinheit - ersten geraden Linien 6b in Richtung der Zeilen (i) der Bildelemente x(i,j) und die ersten geraden Linien 6a in Richtung der Spalten (j) der Bildelemente x(i,j) angeordnet sind. In der Praxis hat es sich bewährt, wenigstens eine horizontale erste gerade Linie 6b und mindestens 5 vertikale erste gerade Linien 6a im Testbild zu nutzen.
Überdies ist es sinnvoll das Testbild so zu gestalten, dass in mindestens einer der n > 1 Ansichten A(k) jeweils jede erste gerade Linie 6a, 6b nahtlos in genau eine oder maximal zwei zweite gerade Linien 7a, 7b übergeht, hier entsprechend Fig. 5.

Für den Fall, dass das optische Element 2 (hier: der Parallaxenbarriereschirm) korrekt vor dem Bildschirm 1 ausgerichtet ist, sollte das von der Kamera 3 aufgenommene Abbild des dargebotenen Testbildes in etwa so aussehen, wie die Ansicht k = 3 in Fig. 5. Bei nicht korrekter Ausrichtung hinsichtlich der rotativen Relativposition des optischen Elements 2 zum Bildschirm 1 zeigen insbesondere die ersten geraden Linien 6a, 6b kein gerades Erscheinungsbild, sondern erscheinen vielmehr unterbrochen oder mit gezackten Rändern. Dies wäre ein Zeichen für die Fortsetzung der Ausrichtung durch weitere rotative Änderung der besagten Relativposition.
Bei nicht korrekter Ausrichtung hinsichtlich der horizontalen und/oder der vertikalen Relativposition des optischen Elements 2 zum Bildschirm 1 gehen auf keinen Fall alle ersten geraden Linien 6a, 6b nahtlos in die entsprechenden zweiten geraden Linien 7a, 7b über. Dies wäre ein Zeichen, das optische Element 2 horizontal und/oder vertikal vor dem Bildschirm 1 zu bewegen, um schließlich zu einer korrekten Position zu gelangen.

Wie aus Fig. 4 bis Fig. 6 ersichtlich sind darüber hinaus in diesem Beispiel in allen der n = 5 Ansichten A(k) vier rechte Winkel 8.1, 8.2, 8.3 und 8.4 enthalten, die durch ihre Anordnung einen kreuzförmigen Abschnitt bilden. Nach dem Schritt der Ausrichtung des optischen Elements 2 vor dem Bildschirm 1 sollen mindestens zwei erste gerade Linien 6a, 6b im von der Kamera 3 aufgenommenen Abbild des dargebotenen Testbildes innerhalb des gebildeten kreuzförmigen Abschnittes befindlich sein, wobei die Abstände jeweils aller ersten geraden Linien 6a, 6b zu den jeweils nächstbenachbarten beiden rechteckigen Winkeln (z. B. rechter Winkel 8.1 zu rechter Winkel 8.2 bzw. zu rechter Winkel 8.4) im Wesentlichen gleich groß sind. Mittels dieser Ausgestaltung wird die Korrektheit der Ausrichtung des optischen Elements 2 vor dem Bildschirm 1 noch erhöht.
Jeweils alle ersten und jeweils alle zweiten geraden Linien 6a, 6b, 7a, 7b haben vorzugweise die gleiche Farbe, wobei sich die Farbe der ersten geraden Linien 6a, 6b und die der zweiten geraden Linien 7a, 7b bevorzugt unterscheiden. In den Zeichnungen Fig. 4 bis Fig. 6 sind die Farben durch unterschiedliche Muster angedeutet.

Um das erfindungsgemäße Verfahren für den industriellen Einsatz noch günstiger zu gestalten, sind in mindestens einer - bevorzugt in allen - der n > 1 Ansichten A(k) alphanumerische Zeichen, bevorzugt Modell- bzw. Seriennummern, und/oder Identifikationsmarken/-objekte enthalten. Damit wird sichergestellt, dass für ein bestimmtes Bildschirmmodell auch das richtige Testbild verwendet wird. In den Figuren 4 bis 6 ist z. B. der Schriftzug "17" 3D" zu sehen.
Nach der Ausrichtung des optischen Elements 2 kann außerdem ein weiterer Schritt der Abspeicherung des von der Kamera 3 aufgenommenen Abbildes des dargebotenen Testbildes durchgeführt werden, wobei bevorzugt eine eindeutige Zuordnung zu dem physischen Bildschirm 1 und/oder dem darauf ausgerichteten optischen Element 2 vorgenommen wird, beispielsweise durch die Benennung der abzuspeichernden Bilddatei für das besagte Abbild in Form einer Seriennummer des Bildschirms 1.

In dem Ausgestaltungsbeispiel wird der Parallaxenbarriereschirm (als optisches Element 2) mittels eines Abstandshalters zur Wahrung des weiter oben definierten Abstandes s dauerhaft an dem Bildschirm 1 angebracht, beispielsweise angeklebt oder angeschraubt. Der Bildschirm 1 kann bevorzugt ein Farb-LCD-Bildschirm sein.

Bei der späteren 3D-Darstellung auf dem Bildschirm 1 mit dem ausgerichteten optischen Element 2 entsprechen die Ansichten A(k) jeweils verschiedenen Perspektiven einer Szene oder eines Gegenstandes, wie bei verschiedenen anderen 3D-Wiedergabeverfahren auch.

In einer technisch äquivalenten Ausgestaltung wird beim erfindungsgemäßen Verfahren das optische Element 2 nicht vor, sondern im Bildschirm, d.h. in Betrachtungsrichtung hinter einem transmissiven Bildgeber, z.B. einem LCD-Panel, angeordnet und ausgerichtet. Dies ist besonders dann vorteilhaft, wenn ein innen liegender Parallaxenbarriereschirm durch eine Beleuchtungsbarriere (z.B. durch strukturierte LED-Beleuchtung) ersetzt wird.

Die Vorteile der Erfindung sind vielseitig. Insbesondere erlaubt das erfindungsgemäße Verfahren die Ausrichtung eines optischen Elements wie etwa eines Parallaxenbarriereschirms oder eines Lentikularschirms auf einem Bildschirm zur Erzeugung eines Bildschirms zur räumlichen Darstellung in verhältnismäßig kurzer Zeit und bei großer Exaktheit. Es ist fernerhin mittels entsprechender Testbilder für verschieden große Bildschirme anwendbar, insofern also sehr flexibel. Überdies kann die besagte Ausrichtung manuell, automatisch oder semiautomatisch umgesetzt werden.
Die Erfindung kann mit einfachen und handelsüblichen Mitteln realisiert werden.

## Patentansprüche

1. Verfahren zur Ausrichtung eines optischen Elements (2) zur Erzeugung eines autostereockopischen Bildschirms zur räumlichen Darstellung zu einem Bildschirm (1) mit Bildelementen x(i,j) in einem Raster aus Zeilen (i) und Spalten (j), umfassend die folgenden Schritte:
- Darbietung eines Testbildes, welches aus verschiedenen Ansichten A(k) mit k = 1,...,n und n>1 besteht, auf den Bildelementen x(i,j) mit Zeilen (i) und Spalten (j), wobei das Testbild mindestens zwei erste gerade Linien (6a, 6b) umfasst, wobei mindestens zwei dieser Linien (6a, 6b) in den jeweils n Ansichten A(k) an unterschiedlichen horizontalen Positionen angeordnet sind und das Testbild mindestens zwei zweite gerade Linien (7a, 7b) umfaßt, die jeweils parallel zu einer der ersten geraden Linien (6a, 6b) ausgerichtet sind und die in den jeweils n Ansichten A(k) an jeweils zumindest den gleichen horizontalen Positionen angeordnet sind,
- Beobachtung des dargebotenen Testbildes durch das optische Element (2) hindurch aus einem definierten Abstand mittels einer zweidimensionalen Kamera (3),
- Ausrichtung des optischen Elements (2) vor dem Bildschirm (1) derart, dass im von der Kamera (3) aufgenommenen Abbild des dargebotenen Testbildes jeweils jede erste gerade Linie (6a, 6b) nahtlos in mindestens eine entsprechend angeordnete zweite gerade Linie (7a, 7b) übergeht, und dass alle ersten und zweiten geraden Linien (6a, 6b, 7a, 7b) im Abbild gerade und ohne Unterbrechung dargestellt sind,
- wodurch die Ausrichtung des optischen Elements (2) zu dem Bildschirm (1) mit Bildelementen x(i,j) hinsichtlich der rotativen Relativposition des optischen Elements (2) zum Bildschirm (1) mit einer Toleranz von höchstens 3 Bogenminuten genau definiert ist, und
- wodurch die Ausrichtung des optischen Elements (2) zu dem Bildschirm (1) mit Bildelementen x(i,j) hinsichtlich der horizontalen Relativposition des optischen Elements (2) zum Bildschirm (1) mit einer Toleranz von höchstens der Breite eines Bildelements x(i,j) genau definiert ist.

2. Verfahren nach Anspruch 1, **dadurch gekennzeichnet, dass** das Testbild mindestens zwei erste gerade Linien (6a, 6b) umfasst, welche zwei voneinander verschiedene Ausdehnungsrichtungen aufweisen, wobei mindestens zwei dieser Linien (6a, 6b) in den jeweils n>1 Ansichten A(k) an unterschiedlichen horizontalen Positionen angeordnet sind und das Testbild mindestens zwei zweite gerade Linien (7a, 7b) umfasst, die jeweils parallel zu einer der ersten geraden Linien (6a, 6b) ausgerichtet sind und die in den jeweils n>1 Ansichten A(k) an jeweils zumindest den gleichen horizontalen Positionen angeordnet sind.

3. Verfahren nach Anspruch 2, **dadurch gekennzeichnet,**
**dass** die mindestens zwei ersten Linen (6a, 6b) jeweils senkrecht zueinander angeordnet sind.

4. Verfahren nach Anspruch 2 oder 3, **dadurch gekennzeichnet,**
**dass** die einen ersten geraden Linien (6b) in Richtung der Zellen (i) der Bildelemente x(i,j) und die anderen ersten geraden Linien (6a) in Richtung der Spalten (j) der Bildelemente x(i,j) angeordnet sind.

5. Verfahren nach einem der vorgenannten Ansprüche, **dadurch gekennzeichnet, dass** in einer der n>1 Ansichten A(k) jeweils jede erste gerade Linie (6a, 6b) nahtlos in maximal zwei zweite gerade Linien (7a, 7b) übergeht.

6. Verfahren nach Anspruch 3 oder 4, **dadurch gekennzeichnet,**
**dass** in mindestens einer der n>1 Ansichten A(k) vier rechte Winkel enthalten sind, die durch ihre Anordnung einen kreuzförmigen Abschnitt bilden, und dass nach dem Schritt der Ausrichtung des optischen Elements (2) vor dem Bildschirm (1) mindestens zwei erste gerade Linien (6a, 6b) im von der Kamera (3) aufgenommenen Abbild des dargebotenen Testbildes innerhalb des von den rechten Winkeln gebildeten kreuzförmigen Abschnittes befindlich sind, wobei die ersten geraden Linien (6a, 6b) zu den jeweils angrenzenden Schenkeln der rechten Winkel im Wesentlichen parallel verlaufen und den gleichen Abstand aufweisen.

7. Verfahren nach einem der vorgenannten Ansprüche, **dadurch gekennzeichnet,**
**dass** jeweils alle ersten geraden Linien (6a, 6b) und jeweils alle zweiten geraden Linien (7a, 7b) mit der gleichen Farbe versehen werden, wobei sich die Farbe der ersten geraden Linien (6a, 6b) und die der zweiten geraden Linien (7a, 7b) bevorzugt unterscheidet.

8. Verfahren nach einem der vorgenannten Ansprüche, **dadurch gekennzeichnet,**
**dass** in mindestens eine - bevorzugt in allen - der n>1 Ansichten A(k) alphanumerische Zeichen, wie Modell- bzw. Seriennummern, und/oder Identifikationsmarken/-objekte eingearbeitet werden.

9. Verfahren nach einem der vorgenannten Ansprüche, **dadurch gekennzeichnet,**
**dass** nach der Ausrichtung des optischen Elements (2) ein weiterer Schritt der Abspeicherung des von der Kamera (3) aufgenommenen Abbildes des dargebotenen Testbildes durchgeführt wird, wobei bevorzugt eine eindeutige Zuordnung zu dem physischen Bildschirm (1) und/oder dem darauf ausgerichteten optischen Element (2) vorgenommen wird, beispielsweise durch die Benennung der abzuspeichernden Bilddatei für das besagte Abbild in Form einer Seriennummer des Bildschirms (1).

10. Verfahren nach einem der vorgenannten Ansprüche, **dadurch gekennzeichnet,**
**dass** die Bildelemente x(i,j) Farbsubpixeln (R, G oder B) oder Clustem von Farbsubpixeln (z. B. RG oder GB) oder Vollfarbpixeln entsprechen.

11. Verfahren nach einem der vorgenannten Ansprüche, **dadurch gekennzeichnet,**
**dass** das optische Element (2) nach der Ausrichtung vor dem Bildschirm (1) in einem definierten Abstand (s) dauerhaft an dem Bildschirm (1) angebracht wird.

12. Verfahren nach einem der Ansprüche 1 - 10, **dadurch gekennzeichnet,**
**dass** das optische Element (2) nach dem Schritt der Ausrichtung nicht an dem Bildschirm (1) angebracht wird, sondern dass in einem weiteren Schritt auf dem optischen Element (2) und/oder auf dem Bildschirm (1) Markierungen angebracht werden, welche eine spätere ausgerichtete Anbringung des optischen Elements (2) an dem Bildschirm (1) gestatten, ohne zu diesem späteren Zeitpunkt das gesamte erfindungsgemäße Verfahren wiederholen zu müssen.

13. Verfahren nach einem der vorgenannten Ansprüche, **dadurch gekennzeichnet,**
**dass** als Bildschirm (1) ein Farb-LCD-Bildschirm, ein Plasma-Display, ein Projektionsschirm, ein LED-basierter Bildschirm, ein OLED-basierter Bildschirm, ein SED-Bildschirm oder ein VFD-Bildschirm verwendet wird.

14. Verfahren nach einem der vorgenannten Ansprüche, **dadurch gekennzeichnet,**
**dass** das optische Element (2) ausgebildet ist als Lentikularschirm, als aktives oder passives holografisch-optisches Element (HOE), als Linsenraster oder als Prismenraster.

15. Verfahren nach einem der Ansprüche 1-13, **dadurch gekennzeichnet,**
**dass** das optische Element (2) ausgebildet ist als Parallaxenbarriereschirm, welcher unter einem Winkel (a) gegenüber der Vertikalen geneigte oder stufenförmige, transparente und opake Abschnitte umfasst.

16. Verfahren nach Anspruch 15, **dadurch gekennzeichnet,**
**dass** der Parallaxenbarriereschirm (2) aus einem Glassubstrat besteht, auf welches die Barrierestruktur aufgebracht wird.

17. Verfahren nach Anspruch 16, **dadurch gekennzeichnet,**
**dass** die Barrierestruktur ein belichteter und entwickelter fotografischer Film ist, der rückseitig auf das Glassubstrat auflaminiert ist, wobei bevorzugt die Emulsionsschicht des fotografisches Films nicht zum Glassubstrat zeigt.

18. Verfahren nach Anspruch 16, **dadurch gekennzeichnet,**
**dass** die opaken Bereiche der Barrierestruktur durch auf das Glassubstrat aufgedruckte Farbe gebildet werden.

19. Verfahren nach einem der vorgenannten Ansprüche, **dadurch gekennzeichnet,**
**dass** das optische Element (2) Mittel zur Verminderung von Störlichtreflexen, bevorzugt mindestens eine interferenzoptische Entspiegelungsschicht, enthält.

## Claims

1. A method for the orientation of an optical element (2) with respect to a display screen (1) with pixels x(i,j) in a raster consisting of rows (i) and columns (j) to produce an autostereoscopic screen for three-dimensional representation, the method comprising:
- presenting a test image, which consists of different views A(k) with k=1, ..., n and n>1, on the pixels x(i,j) with rows (i) and columns (j), said test image comprising at least two first straight lines (6a, 6b), with at least two of said lines (6a, 6b) being placed at different horizontal positions in the respective n views A(k), and the test image comprising at least two second straight lines (7a, 7b), which are each oriented parallel to one of the first straight lines (6a, 6b) and which in each case are placed at least at the same horizontal positions in the respective n views A(k);
- observing the presented test image through the optical element (2) at a defined distance by means of a two-dimensional camera (3);
- orientating the optical element (2) in front of the display screen (1) such that in the image taken by the camera (3) of the presented test image in each case each first straight line (6a, 6b) merges seamlessly into at least one correspondingly placed second straight line (7a, 7b), and that all first and second straight lines (6a, 6b, 7a, 7b) in the image are shown as straight and continuous
- so that the orientation of the optical element (2) to the display screen (1) with pixels x(i,j) is defined precisely with a tolerance of at most 3 arc minutes with respect to the rotative relative position of the optical element (2) to the display screen (1) and
- so that the orientation of the optical element (2) to the display screen (1) with pixels x(i,j) is defined precisely with a tolerance of at most the width of a pixel x(i,j) with respect to the horizontal relative position of the optical element (2) to the display screen (1).

2. The method according to claim 1, **characterised in that** the test image comprises at least two first straight lines (6a, 6b) having two different directions of extension, with at least two of said lines (6a, 6b) being placed at different horizontal positions in the respective n>1 views A(k), and that the test image comprises at least two second straight lines (7a, 7b), which are each oriented parallel to one of the first straight lines (6a, 6b) and which in each case are placed at least at the same horizontal positions in the respective n>1 views A(k).

3. The method according to claim 2, **characterised in that** the at least two first lines (6a, 6b) are each arranged perpendicular to one another.

4. The method according to claim 2 or 3, **characterised in that** the first straight lines (6b) are arranged in the direction of the rows (i) of the pixels x(i,j) and the other first straight lines (6a) are arranged in the direction of the columns (j) of the pixels x(i,j).

5. The method according to any one of the aforementioned claims, **characterised in that** in one of the n>1 views A(k) in each case each first straight line (6a, 6b) merges seamlessly into a maximum of two second straight lines (7a, 7b).

6. The method according to claim 3 or 4, **characterised in that** at least one of the n>1 views A(k) has four right angles that by their arrangement form a cross-shaped section, and that after the step of the orientation of the optical element (2) in front of the display screen (1), at least two first straight lines (6a, 6b) in the image, taken by the camera (3), of the presented test image are within the cross-shaped section formed by the right angles, wherein the first straight lines (6a, 6b) are substantially parallel to the adjacent branches of the right angles and have the same distance.

7. The method according to any one of the aforementioned claims, **characterised in that** in each case all first straight lines (6a, 6b) and all second straight lines (7a, 7b) are provided with the same colour, whereby the colour of the first straight lines (6a, 6b) and that of the second straight lines (7a, 7b) are preferably different.

8. The method according to any one of the aforementioned claims, **characterised in that** alphanumeric characters, such as model or serial numbers, and/or identification marks/objects are incorporated into at least one - preferably all - of the n>1 views A(k).

9. The method according to any one of the aforementioned claims, **characterised in that**, after the orientation of the optical element (2), another step of storing the image taken by the camera (3) of the presented test image is performed, wherein a preferably clear assignment to the physical display screen (1) and/or the optical element (2) oriented thereon is made, for example by naming of the image file to be stored for the image in the form of a serial number of the display screen (1).

10. The method according to any one of the aforementioned claims, **characterised in that** the pixels x(i,j) correspond to colour subpixels (R, G or B) or clusters of colour subpixels (e.g. RG or GB) or full colour pixels.

11. The method according to any one of the aforementioned claims, **characterised in that** the optical element (2) is permanently attached to the display screen (1) at a defined distance (s) after the orientation in front of the display screen (1).

12. The method according to any one of claims 1 to 10, **characterised in that** the optical element (2) is not attached to the display screen (1) after the orientation step, but that in another step, applied to the optical element (2) and/or to the display screen (1) are markers that allow a later oriented attachment of the optical element (2) to the display screen (1) without having to repeat the entire method of the invention at this later point in time.

13. The method according to any one of the aforementioned claims, **characterised in that** a colour LCD screen, a plasma display, a projection screen, an LED-based display, an OLED-based display, an SED display, or a VFD display is used as the display screen (1).

14. The method according to any one of the aforementioned claims, **characterised in that** the optical element (2) is provided as a lenticular screen, as an active or passive holographic optical element (HOE), as a lenticular raster or as a prismatic raster.

15. The method according to any one of claims 1 to 13, **characterised in that** the optical element (2) is provided as a parallax barrier screen comprising transparent and opaque sections that are inclined at an angle (a) relative to the vertical or are stepped.

16. The method according to claim 15, **characterised in that** the parallax barrier screen (2) consists of a glass substrate to which the barrier structure is applied.

17. The method according to claim 16, **characterised in that** the barrier structure is an exposed and developed photographic film, which is laminated to the back of the glass substrate, and the emulsion layer of the photographic film preferably does not face the glass substrate.

18. The method according to claim 16, **characterised in that** the opaque sections of the barrier structure are formed by ink printed on the glass substrate.

19. The method according to any one of the aforementioned claims, **characterised in that** the optical element (2) contains means for reducing spurious light reflections, preferably at least one optical-interference antireflection coating.

## Revendications

1. Procédé d'alignement d'un élément optique (2) par rapport à un écran (1) présentant des pixels x(i,j) dans une grille composée de lignes (i) et de colonnes (j) pour produire un écran auto-stéréoscopique pour l'affichage tridimensionnelle, ledit procédé comprenant les étapes suivantes :
- affichage d'une image mire composée de différentes vues A(k), où k=1, ..., n et n>1, sur lesdits pixels x(i,j) avec des lignes (i) et des colonnes (j), ladite image mire comprenant au moins deux premières lignes droites (6a, 6b), dont au moins deux sont disposées à différentes positions horizontales dans les n vues A(k) respectives, et l'image mire comprenant en outre au moins deux deuxièmes lignes droites (7a, 7b), qui sont chacune orientées parallèlement à une desdites premières lignes droites (6a, 6b) et disposées au moins aux mêmes positions horizontales dans les n vues A(k) respectives;
- observation, à travers l'élément optique (2), à une distance définie, et au moyen d'une caméra bidimensionnelle (3), de l'image mire affichée;
- alignement dudit élément optique (2) devant l'écran (1) de manière que, dans l'image prise par la caméra (3) de l'image mire affichée, chaque première ligne droite (6a, 6b) se continue sans interruption dans au moins une deuxième ligne droite (7a, 7b) disposée de manière correspondante et que les premières et deuxièmes lignes droites (6a, 6b, 7a, 7b) dans ladite image soient toutes représentées comme des lignes droites et continues,
- de sorte que l'alignement de l'élément optique (2) avec l'écran (1) présentant des pixels x(i,j) soit défini exactement avec une tolérance d'au plus 3 minutes d'arc à l'égard de la position relative de rotation de l'élément optique (2) par rapport à l'écran (1), et
- de sorte que l'alignement de l'élément optique (2) avec l'écran (1) présentant des pixels x(i,j) soit défini exactement avec une tolérance d'au plus la largeur d'un pixel x(i,j) à l'égard de la position relative horizontale de l'élément optique (2) par rapport à l'écran (1).

2. Procédé selon la revendication 1, **caractérisé en ce que** l'image mire comprend au moins deux premières lignes droites (6a, 6b) avec deux directions d'extension différentes, au moins deux de ces lignes (6a, 6b) étant disposées à différentes positions horizontales dans les n>1 vues A(k) respectives, et **en ce que** l'image mire comprend au moins deux deuxièmes lignes droites (7a, 7b), qui sont chacune orientées parallèlement à une des premières lignes droites (6a, 6b) et disposées au moins aux mêmes positions horizontales dans les n>1 vues A(k) respectives.

3. Procédé selon la revendication 2, **caractérisé en ce que** les au moins deux premières lignes (6a, 6b) sont perpendiculaires les unes aux autres.

4. Procédé selon la revendication 2 ou 3, **caractérisé en ce que** les premières lignes droites (6b) sont disposées en direction des lignes (i) des pixels x(i,j) et les autres premières lignes droites (6a) sont disposées en direction des colonnes (j) des pixels x(i,j).

5. Procédé selon l'une quelconque des revendications précédentes, **caractérisé en ce que**, dans une des n>1 vues A(k), chaque première ligne droite (6a, 6b) se continue sans interruption dans au plus deux deuxièmes lignes droites (7a, 7b).

6. Procédé selon la revendication 3 ou 4, **caractérisé en ce qu'**au moins une des n>1 vues A(k) présente quatre angles droits disposés de manière à former une portion cruciforme, et **en ce qu'**après l'étape d'alignement de l'élément optique (2) devant l'écran (1), au moins deux premières lignes droites (6a, 6b) dans l'image prise par la caméra (3) de l'image mire se trouvent dans ladite portion cruciforme formée par les angles droits, ces premières lignes droites (6a, 6b) étant essentiellement parallèles aux bras voisins des angles droits et disposées de manière équidistante.

7. Procédé selon l'une quelconque des revendications précédentes, **caractérisé en ce que** toutes les premières lignes droites (6a, 6b) et toutes les deuxièmes lignes droites (7a, 7b) sont respectivement d'une même couleur, la couleur des premières lignes droites (6a, 6b) et celle des deuxièmes lignes droites (7a, 7b) étant de préférence différentes.

8. Procédé selon l'une quelconque des revendications précédentes, **caractérisé en ce que** des caractères alphanumériques, comme des nombres de modèle ou de série, et/ou des repères/objets d'identification, sont intégrés dans au moins une - et de préférence chacune - des n>1 vues A(k).

9. Procédé selon l'une quelconque des revendications précédentes, **caractérisé en ce qu'**il y a, après l'alignement de l'élément optique (2), en outre une étape de mémorisation de l'image prise par la caméra (3) de l'image mire affichée, dans laquelle étape on effectue de préférence une affectation unique audit écran (1) physique et/ou à l'élément optique (2) aligné sur ledit écran, cette affectation étant effectuée, par exemple, en identifiant le fichier d'image à mémoriser pour l'image par un nombre de série dudit écran (1).

10. Procédé selon l'une quelconque des revendications précédentes, **caractérisé en ce que** les pixels x(i,j) correspondent à des sous-pixels de couleur (R, G ou B), ou à des groupes de sous-pixels de couleur (par exemple, RG ou GB) ou à des pixels pleine couleur.

11. Procédé selon l'une quelconque des revendications précédentes, **caractérisé en ce que** l'on fixe l'élément optique (2) à l'écran (1) de manière permanente et à une distance définie (s) après son alignement devant l'écran (1).

12. Procédé selon l'une quelconque des revendications 1 à 10, **caractérisé en ce que** l'on ne fixe pas l'élément optique (2) à l'écran (1) après l'étape d'alignement, mais que l'on fixe, dans une étape additionnelle, à l'élément optique (2) et/ou à l'écran (1) des repères permettant d'effectuer à un moment ultérieur une fixation alignée de l'élément optique (2) à l'écran (1) sans nécessitant une répétition du procédé entier de l'invention à ce moment ultérieur.

13. Procédé selon l'une quelconque des revendications précédentes, **caractérisé en ce que** l'on utilise comme écran (1) un écran LCD couleur, un écran plasma, un écran de projection, un écran LED, un écran OLED, un écran SED, ou un écran VFD.

14. Procédé selon l'une quelconque des revendications précédentes, **caractérisé en ce que** l'élément optique (2) se présente sous la forme d'un écran lenticulaire, d'un élément optique holographique (EOH) actif ou passif, d'une grille lenticulaire ou d'une grille prismatique.

15. Procédé selon l'une quelconque des revendications 1 à 13, **caractérisé en ce que** l'élément optique (2) se présente sous la forme d'un écran à barrière de parallaxe comprenant des portions transparentes et des portions opaques qui sont inclinées sous un angle (a) par rapport à la verticale ou étagées.

16. Procédé selon la revendication 15, **caractérisé en ce que** l'écran à barrière de parallaxe (2) est constitué d'un substrat en verre sur lequel on applique la structure barrière.

17. Procédé selon la revendication 16, **caractérisé en ce que** la structure barrière est un film photographique exposé et développé, qui est laminé sur la face arrière du substrat en verre, et la couche d'émulsion dudit film photographique est de préférence détournée du substrat en verre.

18. Procédé selon la revendication 16, **caractérisé en ce que** les portions opaques de la structure barrière sont formées par de l'encre imprimée sur le substrat en verre.

19. Procédé selon l'une quelconque des revendications précédentes, **caractérisé en ce que** l'élément optique (2) contient des moyens aptes à réduire des réflexions parasitaires, ces moyens étant constitués de préférence par au moins une couche anti-réfléchissante à propriétés optiques interférentielles.
